# EUROPEAN PATENT SPECIFICATION

(11) **EP 2 463 530 B1**
(45) Date of publication and mention of the grant of the patent: **16.08.2017**
(21) Application number: 11164371.4
(22) Date of filing: 29.04.2011
(51) Int. Cl.: F16B 37/00, F16B 39/02

(54) **Precision locking nut having multiple locking mechanism modes**
Präzisionssicherungsmutter mit mehreren Verriegelungsmechanismusmodi
Écrou de verrouillage de précision doté de plusieurs modes de mécanisme de verrouillage

(30) Priority: 09.12.2010 TW 099143026; 17.12.2010 TW 099144435
(43) Date of publication of application: 13.06.2012
(73) Proprietor: Yinsh Precision Ind. Co., Ltd., Taichung City, Chinese Taipei (TW)
(72) Inventor: Wu, Yu-Chung, Taichung City (TW); Wu, Yu-Chieh, Taichung City (TW)
(74) Representative: Lang, Christian

(56) References cited:
- EP-A1- 0 965 768
- DD-A1- 241 287

## Description

### FIELD OF THE INVENTION

The present invention relates to a precision locking nut having multiple locking mechanism modes, particularly to a nut which couples over a shaft and firmly locks up the work piece applied on the shaft with better locking efficiency and more convenient manipulation.

### BACKGROUND OF THE INVENTION

According to the prior art of a lock nut to be bolted onto a shaft, the nut is coupled with the shaft and then locked. The most common application is to lock and position the bearing on a ball screw or on the shaft of a machine. The first type of the prior art is to apply a cavity in the lock nut and a tightening lump lodged in the cavity. When a screw bolt is bolted into the cavity, it will push the tightening lump to force the nut to be tightly locked onto a shaft. The second type is to apply a groove indented in the inner wall of the lock nut and a cavity axially extended to the groove. When a screw bolt is bolted into the cavity, it will force the inner wall of the nut to be deformed and to tightly lock the lock nut onto a shaft.

There are still certain practical deficiencies in above prior arts. The applicant has devoted a lot of efforts in research and development to improve them. For example, a lock nut for bearings, Taiwanese Patent Application No. 268543 invented by the applicant, is designed to improve above second type prior art. The technique of this patent applies design of an indented annular groove. It has different function and effect from the one which applies a screw bolt to push a tightening lump.

A balance nut for main shafts as Taiwanese Patent No. 1262262, and a tamping mechanism of a high-speed shaft and its nut as Taiwanese Utility Patent No. M273418 invented by the applicant, are designed to improve above two types of prior arts which do not have balance functions. Current balance technique applied on the prior arts of locking nuts is to drill holes and remove material, yet it causes deficiencies such as inconvenient manipulation and waste of extra work and time. The patent of a balance nut for main shafts applies a weighing lump on a lock nut to improve its balance, but the embodiments still have noise problem and a deficiency from balancing implementation.

A locking mechanism of a nut as Taiwanese Utility Patent No. M379665 invented by the applicant, is designed to improve above first type prior art which has tightening deficiency to cause unstable situation for a lock nut. This utility patent also improves tightening deficiency of a nut in afore mentioned Patent No. I262262 invented by the applicant.

From document DD 241 287 A1 a precision locking nut is known, comprising a main body with a threaded coupling opening and multiple thru-holes passing through the main body from outer surfaces to the coupling opening, being aligned in non-parallel directions to the main axis of the main body and accommodating tightening assemblies comprising screw bolts and tightening lumps, such that by screwing the screw bolts into the thru-hole the tightening lumps being pressed against a shaft body of an external shaft placed in the coupling opening and, therefore, providing friction forces to secure the main body on the shaft.

From document EP 0 965 768 A1 a precision locking nut is known, which comprises a main body with a threaded coupling opening, wherein at the inner side of the opening a groove is formed so that screws driven into thru-holes being parallel to the coupling opening cause the inner sidewall to be tilted towards the central axis of the coupling opening so that a shaft placed in the coupling opening is clamped.

The applicant has accumulated a lot of experience in research and development of locking nuts. Innovation and outstanding progress are his motto for business management. The applicant has gotten more inventions respectively filed as Taiwanese Patent and Utility Patent Application Nos. 099130583, 099135923, 099218005 and 099221417 in succession to deal with the existed deficiencies of his patents. Even though these inventions have been filed for patent or utility patent application, they are still not flawless. The applicant has never given up doing research, design and experiment. The present invention is a fruitful result of all the efforts.

### SUMMARY OF THE INVENTION

The first objective of the present invention is to provide a precision locking nut having multiple locking mechanism modes, and the nut can tightly lock a work piece on a shaft with dual operational options to enhance its convenience for users.

This objective is achieved by a precision locking nut as claimed in claim 1. Advantageous embodiments, in particular those suitable for solving further objectives mentioned below are the subject of the dependent claims.

Accordingly, the technique of the present invention applies a main body, a coupling opening axially penetrating the main body, and two different types of thru-holes. There is a locking assembly defined within each thru-hole respectively. The locking assembly comprises a screw bolt. By tightening the screw bolt, each locking assembly in the thru-hole is driven to tightly lock the main body and the shaft with different modes of mechanism.

A further objective is to provide a precision locking nut having multiple locking mechanism modes, and the nut can tightly lock a work piece on a shaft with triple operational options to enhance its convenience for users. In order to achieve the objective, the technique of the present invention applies a main body, a coupling opening axially penetrating the main body, and three different types of thru-holes. There is a locking assembly defined within each thru-hole respectively. The locking assembly comprises a screw bolt. By tightening the screw bolt, each locking assembly in the thru-hole is driven to tightly lock the main body and the shaft with different modes of mechanism.

A further objective is to provide a precision locking nut having multiple locking mechanism modes, particularly to a nut which couples over a shaft and firmly locks up the work piece applied on the shaft with improved convenience, much more stable rotation for the shaft and reduced noise. In order to achieve the objective, the technique of the present invention applies a main body, a coupling opening axially penetrating the main body, at least a first thru-hole and at least a second thru-hole. A first locking assembly and a second locking assembly are defined within the first thru-hole and the second thru-hole respectively. There is a plurality of cavities defined around the outer periphery or the main body. At least a cavity has a weighing lump placed in it to stabilize the rotation of the shaft, and each cavity has a muffling lump to seal and level up its opening in order to reduce the noise cause by the shaft rotation.

### BRIEF DESCRIPTION OF THE DRAWINGS

FIG 1 is a schematic drawing of fundamental structure applied to a shaft in accordance with the present invention;
FIG. 2 is a front view of the first embodiment in accordance with the present invention;
FIG. 3 is a cross-sectional view taken along plane A-A in FIG 2;
FIG 4 is a front view of the second embodiment in accordance with the present invention;
FIG 5 is a cross-sectional view taken along plane A-A1 in FIG. 4;
FIG 6 is a cross-sectional view taken along plane A-A2 in FIG. 4;
FIG 7 is a front view of the third embodiment in accordance with the present invention;
FIG. 8 is a cross-sectional view taken along plane A-A in FIG. 7;
FIG. 9 is a front view of the fourth embodiment in accordance with the present invention;
FIG 10 is a cross-sectional view taken along plane A-A in FIG. 9;
FIG. 11 is a front view of the fifth embodiment in accordance with the present invention;
FIG. 12 is a cross-sectional view taken along plane A-A in FIG 11;
FIG. 13 is a front view of the sixth embodiment in accordance with the present invention;
FIG. 14 is a cross-sectional view taken along plane A-A in FIG 13;
FIG. 15 is a front view of the seventh embodiment in accordance with the present invention;
FIG. 16 is a cross-sectional view taken along plane A-A in FIG 15;
FIG. 17 is a front view of the eighth embodiment in accordance with the present invention;
FIG. 18 is a cross-sectional view taken along plane A-A in FIG 17;
FIG. 19 is a front view of the ninth embodiment in accordance with the present invention;
FIG. 20 is a cross-sectional view taken along plane A-A in FIG 19;
FIG. 21 is a front view of the tenth embodiment in accordance with the present invention;
FIG. 22 is a cross-sectional view taken along plane A-A in FIG 21;
FIG. 23 is a cross-sectional view taken along plane A1-A1 in FIG. 21;
FIG. 24 is a cross-sectional view taken along plane A2-A2 in FIG. 21;
FIG. 25 is a front view of the eleventh embodiment in accordance with the present invention;
FIG. 26 is a cross-sectional view taken along plane A-A1 in FIG. 25; and
FIG. 27 is a cross-sectional view taken along plane A-A2 in FIG. 25.

### DETAILED DESCRIPTION OF THE PREFERRED EMBODIMENT

### I. BASIC FEATURES ACHIEVING 1ST OBJECTIVE

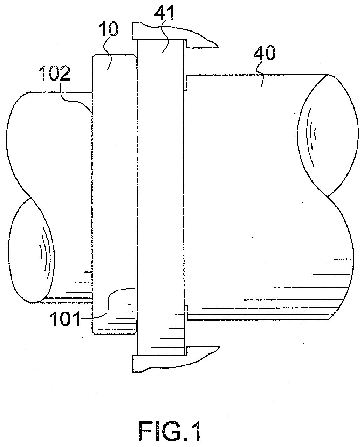

Referring to FIGs. 1 to 20, features of fundamental arts to achieve the first objective of the present invention are detailed as following descriptions. A coupling opening 11 is defined in an annular main body 10 which has two opposite end surfaces 101/102. A thread portion 12 is defined on the inner wall of the coupling opening 11 to be bolted onto a shaft 40 in order for the end surface 101 to lean against a work piece 41 on the shaft 40 (if the shaft 40 is a turning shaft, the work piece 41 is a bearing located between the shaft 40 and the machine parts) and to maintain superb support between the shaft 40 and the work piece 41. Wherein, in the main body 10 are two out of four different types of thru-holes 14/14b/14c/14d with a locking assembly defined within respectively. The locking assembly comprises a screw bolt 20. By tightening the screw bolt 20, the locking assembly in the thru-holes 14/14b/14c/14d is driven to tightly lock the main body 10 and the shaft 40 with different modes of locking mechanism.

### II. BASIC FEATURES ACHIEVING 2ND OBJECTIVE

Referring to FIGs. 1, and 21 to 27, basic features of the technology to achieve the second objective of the present invention are detailed as following descriptions. A coupling opening 11 is defined in an annular main body 10 which has two opposite end surfaces 101/102. A thread portion 12 is defined on the inner wall of the coupling opening 11 to be bolted onto a shaft 40 in order for the end surface 101 to lean against a work piece 41 on the shaft 40 and to maintain superb support between the shaft 40 and the work piece 41. Wherein, in the main body 10 are three out of four different types of thru-holes 14/14b/14c/14d with a locking assembly defined therein respectively. The locking assembly comprises a screw bolt 20. By tightening the screw bolt 20, the locking assembly in the thru-holes 14/14b/14c/14d is driven to tightly lock the main body 10 and the shaft 40 with different modes of locking mechanism.

### III. BASIC FEATURES ACHIEVING 3RD OBJECTIVE

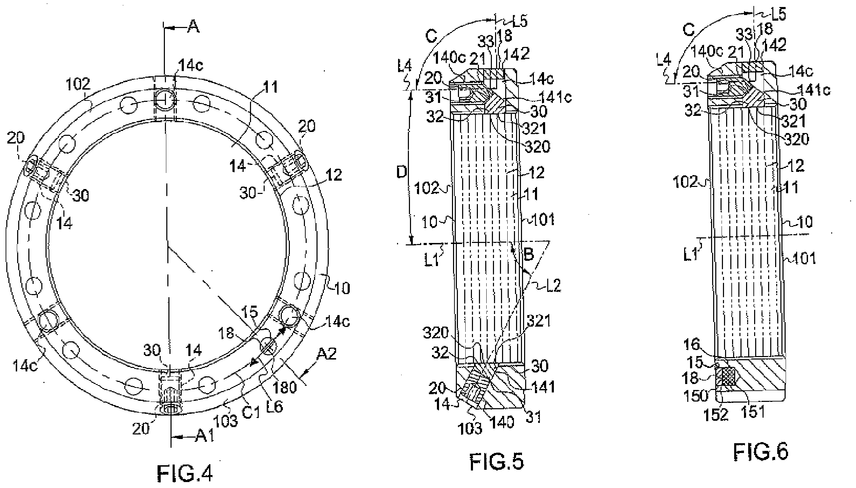

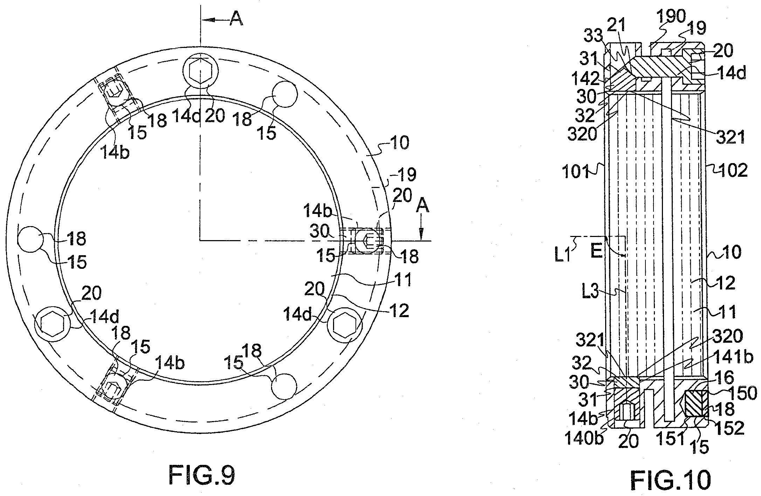

Referring to FIGs. 4, 6, and 9 to 12, basic features of the technology to achieve the third objective of the present invention are detailed as following descriptions. There is a plurality of cavities 15 defined around the outer periphery of the main body 10 and distributed along the central axis L1 of the main body 10 with equal central angles. One end of each cavity 15 is closed and the other end has an opening 150. Each cavity 15 has a first threaded cavity section 151 and a second threaded cavity section 152 orderly aligned therein, one end of the first threaded cavity section 151 is closed, one end of the second threaded cavity section 152 extends to the opening 150, and the other end of the first threaded cavity section 151 and the other end of the second threaded cavity section 152 are linked. Wherein, the first threaded cavity section 151 allows a threaded weighing lump 16 to be bolted in and the second threaded cavity section 152 allows a threaded muffling lump 18 to be bolted in. The material of the muffling lump 18 could be high polymer resin, but a preferable embodiment applied in the present invention is polycarbonate fiber (PC fiber) due to its light-weighted and stable quality. Furthermore, when the muffling lump 18 is bolted into the second threaded cavity section 152 of the cavity 15, it could be automatically positioned to avoid being not screwed enough or being over-screwed. The inclination angle of the last thread is reduced for the muffling lump 18 to be stopped and positioned when its last thread reaches the thread of the second threaded cavity section 152. Shown as in FIGs. 6 and 10, the cavities 15 are defined in the second end surface 102 of the main body 10. As shown in Fig. 4, in one preferable embodiment of the present invention, one top end of the muffling lump 18 has a notch 180 extended along a straight line L6 for a screwdriver to be able to bolt the muffling lump 18. When the muffling lump 18 is bolted and positioned in the second threaded cavity section 152, the direction of the straight line L6 will be a tangent to a circle C1 which is concentric to the center of the main body 10.

### IV. EMBODIMENTS OF THE LOCKING ASSEMBLY

Referring to FIGs.1 to 8, the first embodiment of the locking assembly includes screw bolts 20 and tightening lumps 30. The tightening lumps 30 are mounted in the first thru-hole 14, the second thru-hole 14b and the third thru-hole 14c, and the screw bolts 20 are respectively bolted into the first thru-hole 14, the second thru-hole 14b and the third thru-hole 14c as well. Each tightening lump 30 has two opposite end portions 31/32 facing opposite directions. One end portion 31 is pushed by the screw bolt 20 and the other end portion 32 has a tightening surface 320 to lock against the shaft 40. The tightening surface 320 is in accord with the wall of the coupling opening 11, it is curved to matches the inner periphery of the coupling opening 11, and it is defined thereon a thread portion 321 which has the same thread size as the thread of the thread portion 12 of the coupling opening 11.

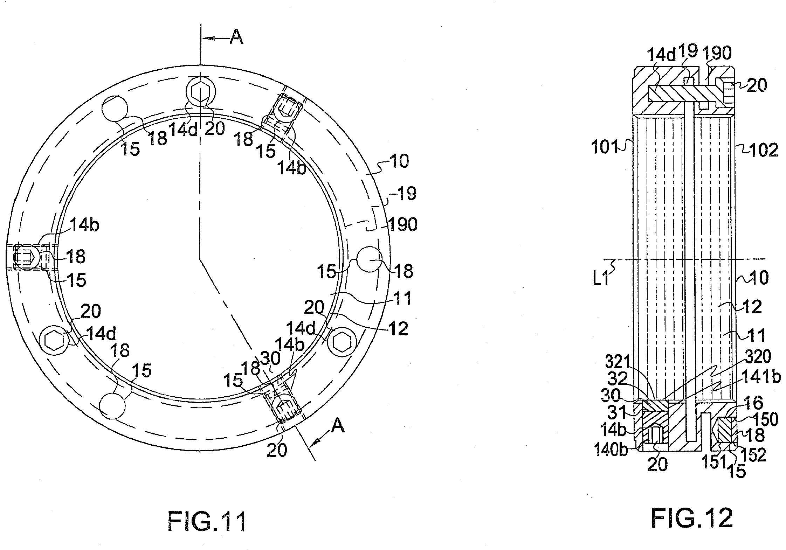

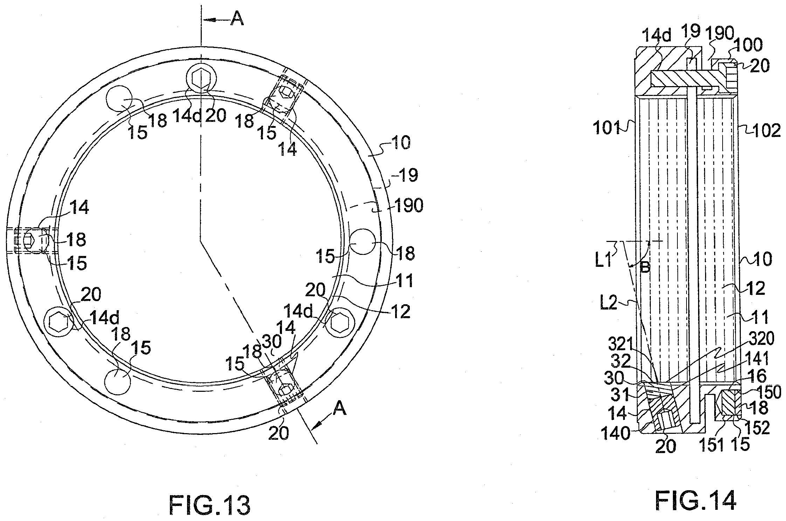

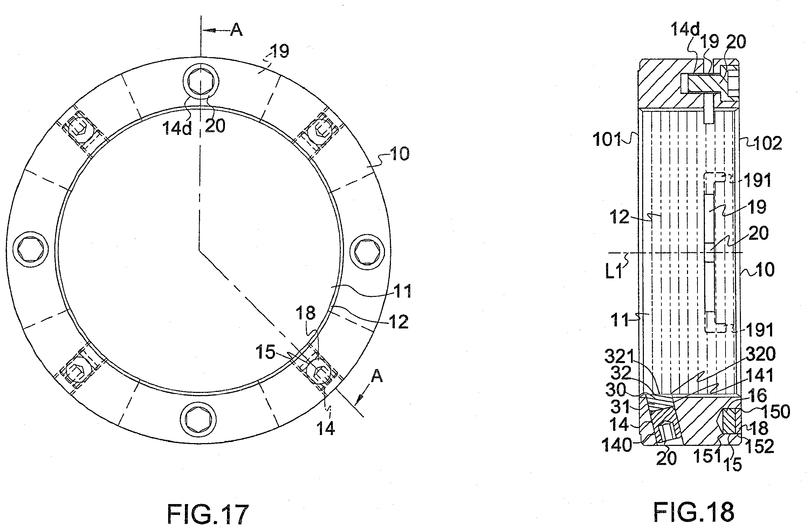

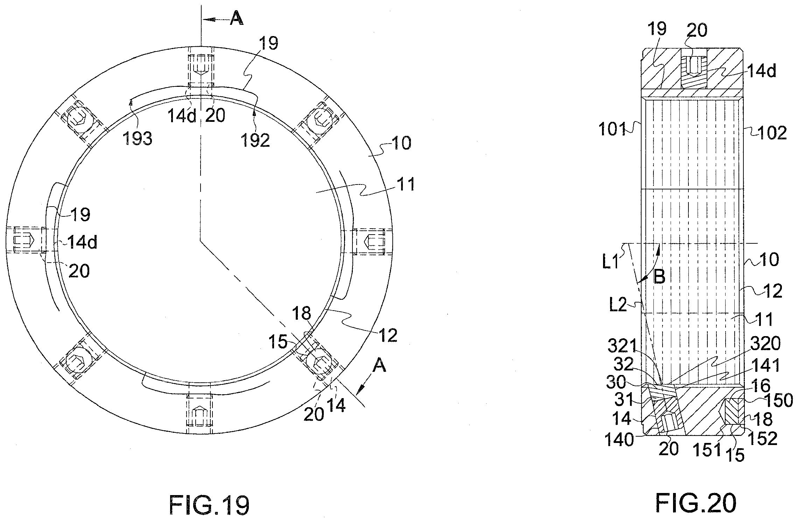

Referring to FIGs.1, and 9 to 20, the second embodiment of the locking assembly includes screw bolts 20 and at least a groove 19. When a screw bolt 20 is tightly bolted into a thru-hole 14d, it will compel two sidewalls of the groove 19 to generate a pair of force with opposite directions. In the mean time, the inner wall of the coupling opening 11 is partially deformed to force the main body 10 tightly locked on the shaft. Shown as in FIGs. 9 and 10, there are two grooves 19/190, the groove 19 is radially recessed from the inner wall of the coupling opening 11, and the groove 190 is radially recessed from the outer periphery of main body 10; the groove 19 is closer to the end surface 102 than the groove 190 is; and the thru-hole 14d is extended along the direction parallel to the central axis of the main body 10 and links both grooves 19/190. Shown as in FIGs. 11 and 12, there are two grooves 19/190, the groove 190 is radially recessed from the outer periphery of main body 10, and the groove 19 is radially recessed from the inner wall of the coupling opening 11; the groove 190 is closer to the end surface 102 than the groove 19 is; and the thru-hole 14d is extended along the direction parallel to the central axis of the main body 10 and links both grooves 19/190. Shown as in FIGs. 13 and 14, there are two grooves 19/190, the groove 190 is radially recessed from the outer periphery of main body 10, and the groove 19 is radially recessed from the inner wall of the coupling opening 11; the groove 190 is closer to the end surface 102 than the groove 19 is; and the thru-hole 14d is extended along the direction parallel to the central axis of the main body 10 and links both grooves 19/190; wherein, a fringe portion 100 which is a part of the main body 10 ranged between the groove 190 and the end surface 102 is defined with an outer smaller diameter; and when the screw bolt 20 is tightly bolted, the coupling opening 11 corresponding to the fringe portion 100 is deformed to firmly clasp onto the shaft 40. Shown as in FIGs. 17 and 18, there are four grooves 19 longitudinally distributed around the central axis L1 of the main body 10 with equal distance between each other. Each groove 19 laterally penetrates through the main body 10 along the radial direction of the main body 10 and both ends of each groove 19 vertically extend an extended groove 191. Each groove 19 also intersects with one thru-hole 14d. When one screw bolt 20 is tightly bolted into one thru-hole 14d, it will compel two sidewalls of the groove 19 to generate a pair of force with opposite directions and to force the inner wall of the coupling opening 11 being partially deformed. Shown as in FIGs. 19 and 20, there are four grooves 19 longitudinally distributed around the central axis L1 of the main body 10 with equal distance between each other, each groove 19 has two lateral sides penetrating through the both end surfaces 101, 102 of the main body 10, and has at least one end 192 open, in the embodiment illustrated in the figures, one end 192 of the groove is open, and the other end 193 is closed; Each groove 19 also intersects with one thru-hole 14d which is extended from the outer periphery of the main body 10. When one screw bolt 20 is tightly bolted into one thru-hole 14d, it will compel two sidewalls of the groove 19 to generate a pair of force with opposite directions and to force the inner wall of the coupling opening 11 being partially deformed.

### V. EMBODIMENTS OF DIFFERENT MECHANIC COMBINATION

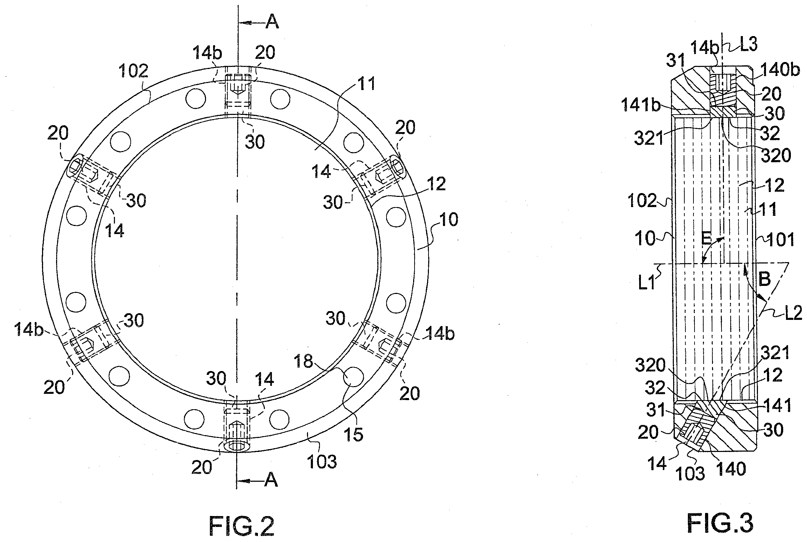

Referring to FIGs. 2 and 3, the first embodiment to achieve the first objective of the present invention is detailed as following descriptions. A coupling opening 11, three thru-holes 14 and three thru-holes 14b are defined in an annular main body 10. The thru-holes 14 and the thru-holes 14b respectively have a first axial path and a second axial path with respect to the central axis L1 of the main body 10, the shape of the first axial path of the thru-holes 14 and the shape of the second axial path of the thru-holes 14b are different from each other, and three thru-holes 14 and three thru-holes 14b are alternately distributed around the central axis L1 of the main body 10 with equal central angles. A locking assembly as depicted in the previous first embodiment is defined within each thru-hole 14 and thru-hole 14b respectively. The locking assembly comprises a tightening lump 30 and a screw bolt 20. Wherein, the thru-hole 14 includes two joint first straight portions 140/141 with the same axis which has an included angle B between its axis L2 and the central axis L1 of the main body 10. The measure of the included angle B is larger than zero degree and smaller than 90 degree (in one preferable embodiment of the present invention, the measure is designed to be 6zero degree in order to reduce torque caused by tightening the nut and to have better performance of loosening proof). The thru-hole 14b includes two joint second straight portions 140b/141b with the same axis which is perpendicular to the central axis L1 of the main body 10 (also the axis of the coupling opening 11). The first straight portion 140 and the second straight portion 140b are both extended to the outer periphery of the main body 10 respectively with inner threads for a screw bolt 20 to be bolted in. The first straight portion 141 and the second straight portion 141b are both extended to the inner wall of the coupling opening 11 respectively for a tightening lump 30 to be lodged in.

Referring to FIGs. 4 to 6, the second embodiment to achieve the first objective of the present invention is detailed as following descriptions. A coupling opening 11, three thru-holes 14 and three thru-holes 14c are defined in an annular main body 10. The thru-holes 14 and the thru-holes 14c respectively have a first axial path and a third axial path with respect to the central axis L1 of the main body 10, the shape of the first axial path of the thru-holes 14 and the shape of the third axial path of the thru-holes 14c are different from each other, and three thru-holes 14 and three thru-holes 14c are alternately distributed around the central axis L1 of the main body 10 with equal central angles. A locking assembly as depicted in the previous first embodiment is defined within each thru-hole 14 and thru-hole 14c respectively. The locking assembly comprises a tightening lump 30 and a screw bolt 20. Wherein, the thru-hole 14 includes two joint first straight portions 140/141 with the same axis which has an included angle B between itself and the central axis L1 of the main body 10 (also the axis of the coupling opening 11). The measure of the included angle B is larger than zero degree and smaller 90 degree. The thru-hole 14c includes two joint third straight portions 140c/141c with an included angle C between their axes (the included angle C is 90 degrees shown in the figure). The first straight portion 140 is extended to an inclined surface 103 which is located at the intersection of the end surface 102 and the outer periphery of the main body 10, and the third straight portion 140c is extended to the end surface 102. The first straight portion 141 and the third straight portion 141c are both extended to the inner wall of the coupling opening 11 respectively. The first straight portion 140, extended to the outer periphery of the main body 10, has a different axis relative to the third straight portion 140c and they both have inner threads for screw bolts 20 to be bolted in. The first straight portion 141 and the third straight portion 140c, extended to the inner wall of the coupling opening 11, both allow a tightening lump 30 to be lodged in respectively. In the present embodiment, a vent 142 is extended from the joint of the two third straight portions 140c/141c to the outer periphery of the main body 10. A taper portion 21 is defined at the end of the screw bolt 20 in the thru-hole 14c in the embodiment as well. At the first end portion 31 of the tightening lump 30 is also a taper portion 33. When a screw bolt 20 is bolted in, the taper portion 21 and the taper portion 33 will touch and function in coordination to make the tightening lump 30 be lodged toward the central axis L1 of the main body 10 smoothly.

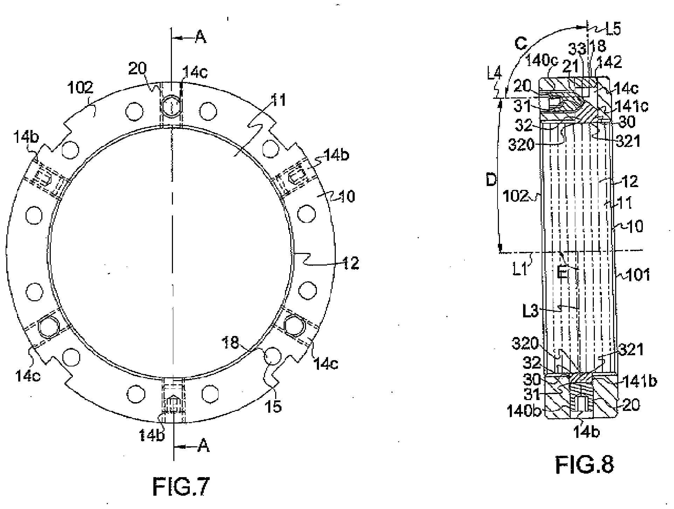

Referring to FIGs. 7 to 8, the third embodiment to achieve the first objective of the present invention is detailed as following descriptions. A coupling opening 11, three thru-holes 14b and three thru-holes 14c are defined in an annular main body 10. The thru-holes 14b and the thru-holes 14c respectively have an axial path against the central axis L1 of the main body 10, the shapes of the axial paths of the thru-holes 14b and the thru-holes 14c are different from each other, and three thru-holes 14b and three thru-holes 14c are alternately distributed around the central axis L1 of the main body 10 with equal central angles. A locking assembly as depicted in the previous first embodiment is defined within each thru-hole 14b and thru-hole 14c respectively. The locking assembly comprises one tightening lump 30 and one screw bolt 20. The thru-hole 14b includes two joint second straight portions 140b/141b with the same axis L3 which is perpendicular to the central axis L1 of the main body 10 (also the axis L3 is perpendicular to the axis of the coupling opening 11). Each thru-hole 14c includes two joint third straight portions 140c/141c with an included angle C between their axes L4 and L5 (the included angle C is 90 degrees shown in the figure). The third straight portion 140c is extended to the end surface 102 of the main body 10, and the second straight portion 140b is extended to the outer periphery of the main body 10. They both have inner threads for screw bolts 20 to be bolted in and their axes L3 and L4 have different included angles E and D against the central axis L1 respectively. The second straight portion 141b and the third straight portion 141c are extended to the inner wall of the coupling opening 11 and each of them allows a tightening lump 30 to be lodged in respectively. A taper portion 21 is defined at the end of the screw bolt 20 in the thru-hole 14c in the present embodiment and a taper portion 33 is also defined at the first end portion 31 of the tightening lump 30. When a screw bolt 20 is bolted in, the taper portion 21 and the taper portion 33 will touch and function in coordination to make the tightening lump 30 be lodged towards the central axis L1 of the main body 10 smoothly.

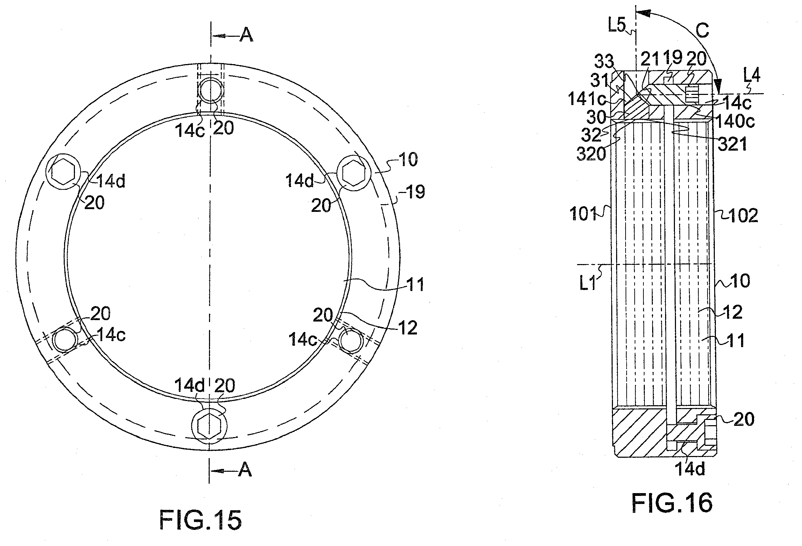

Referring to FIGs. 9 to 20, the fourth embodiment to achieve the first objective of the present invention is detailed as following descriptions. A coupling opening 11, three thru-holes 14 or three thru-holes 14b or three thru-holes 14c and three thru-holes 14d are defined in an annular main body 10. The thru-holes 14 or the thru-holes 14b or the thru-holes 14c and the thru-holes 14d are alternately distributed around the central axis L1 of the main body 10 with equal central angles. One locking assembly as depicted in the aforementioned first embodiment is defined within each thru-hole 14b or the thru-holes 14b or the thru-holes 14c, and one locking assembly as depicted in the aforementioned second embodiment is defined within thru-hole 14d respectively. The locking assembly in the first embodiment comprises a tightening lump 30 and a screw bolt 20, but the one in the second embodiment comprises a screw bolt 20 and at least a groove 19 radially recessed from the inner wall of the coupling opening 11. Wherein, the thru-hole 14b includes two joint second straight portions 140b/141b with the same axis L3 which is perpendicular to the axis of the central axis L1 of the main body 10 in one embodiment shown as in FIGs. 9 and 10. The thru-hole 14d links through two grooves 19/190 illustrated in the figures 9 and 10, and the groove 19 is closer to the end surface 102 than the groove 190 is. One end of the thru-hole 14d also links to a vent 142, which allows a tightening lump 30 to be lodged in, and the other end is extended to the inner wall of the coupling opening 11. When a screw bolt 20 is bolted in, the end of the screw bolt 20 will push the tightening lump 30 moving toward the central axis L1 of the main body 10. In one embodiment shown as in FIGs. 13 and 14, each thru-hole 14 includes two joint third straight portions 140/141 with the same axis L2 which has an included angle B between itself and the central axis L1 of the main body 10 (also the axis L2 is perpendicular to the axis of the coupling opening 11). The measure of the included angle B is larger than zero degree and smaller than 90 degree (in one preferable embodiment of the present invention, the measure is designed to be 6zero degrees). In one embodiment shown as in FIGs. 15 and 16, the thru-hole 14c includes two joint third straight portions 140c/141c with an included angle C between their axes L4, L5 (the included angle C is 90 degrees shown in the figure). Shown as in FIGs. 9 to 20, the straight portions 140/140b/140c/140d are extended to the outer periphery of the main body 10 and the straight portions 141/141b/141c are extended to the inner wall of the coupling opening 11. Each straight portion 140/140b/140c, extended to the outer periphery of the main body 10, has inner threads for a screw bolt 20 to be bolted in. Each straight portion 141/141b/141c, extended to the inner wall of the coupling opening 11, allows a tightening lump 30 to be lodged in.

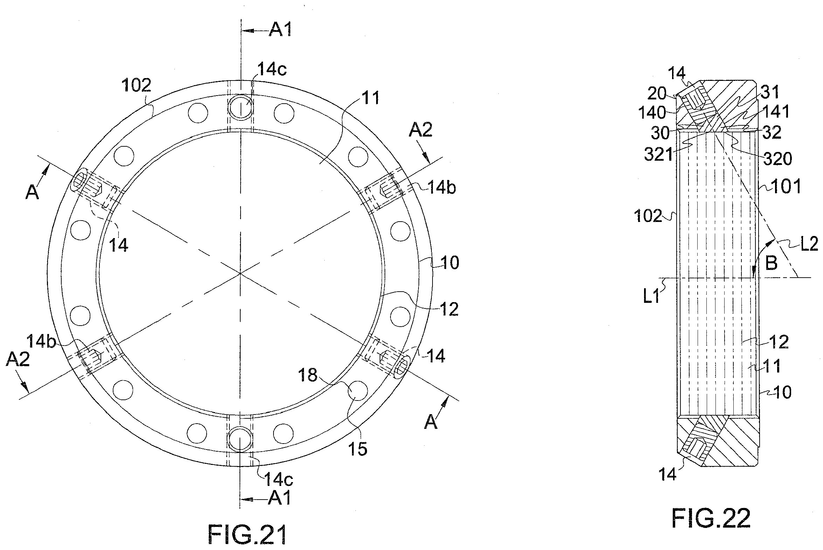

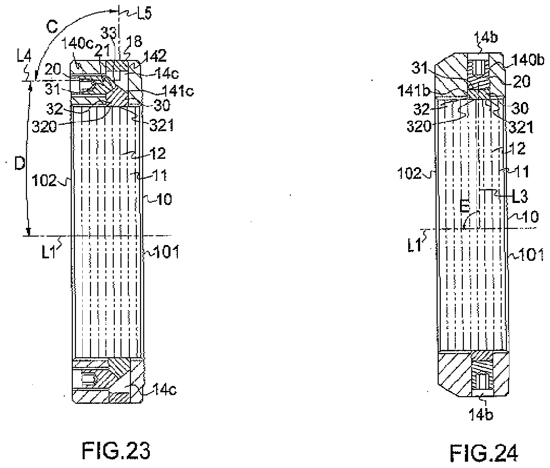

Referring to FIGs. 21 to 24, the first embodiment to achieve the second objective of the present invention is detailed as following descriptions. A coupling opening 11, two thru-holes 14, two thru-holes 14b and two thru-holes 14c are defined in an annular main body 10. The thru-holes 14, thru-holes 14b and the thru-holes 14c respectively have a axial path against the central axis L1 of the main body 10, the shapes of the axial paths of the thru-holes 14b, the thru-holes 14b and the thru-holes 14c against the central axis L1 are different from each other, and two thru-holes 14, two thru-holes 14b and two thru-holes 14c are alternately distributed around the central axis L1 of the main body 10 with equal central angles. A locking assembly as depicted in the aforementioned first embodiment is defined within each thru-holes 14, thru-hole 14b and thru-hole 14c respectively. The locking assembly comprises a tightening lump 30 and a screw bolt 20. Shown as in FIG. 22, each thru-hole 14 includes two joint first straight portions 140/141 with the same axis L2 which has an included angle B between itself and the central axis L1 of the main body 10 (also the axis L2 is perpendicular to the axis of the coupling opening 11). The measure of the included angle B is larger than zero degree and smaller than 90 degree. Shown as in FIG. 23, each thru-hole 14c includes two joint third straight portions 140c/141c with an included angle C between their axes L4 and L5 (the included angle C is 90 degrees shown in the figure). The third straight portion 140c is extended to the end surface 102 of the main body 10. A taper portion 21 is defined at the end of the screw bolt 20 in the thru-hole 14c in the present embodiment and a taper portion 33 is also defined at the first end portion 31 of the tightening lump 30. When one screw bolt 20 is bolted in, the taper portion 21 and the taper portion 33 will touch and function in coordination to make the tightening lump 30 be lodged toward the central axis L1 of the main body 10 smoothly. Shown as in FIG. 24, each thru-hole 14b includes two joint second straight portions 140b/141b with the same axis L3 which is perpendicular to the central axis L1 of the main body 10 (the included angle E is 90 degrees). Respectively shown in FIG 22 to 24, the first straight portion 140, the second straight portion 140b and the third straight portion 140c are all extended to the outer periphery of the main body 10 respectively, their axes L2, L3 and L4 have different included angles B, E and D against the central axis L1 of the main body 10 respectively, and there are inner threads defined within each of them for one screw bolt 20 to be bolted in. The first straight portion 141, the second straight portion 141b and the third straight portion 141c are all extended to the inner wall of the coupling opening 11 respectively for one tightening lump 30 to be lodged in.

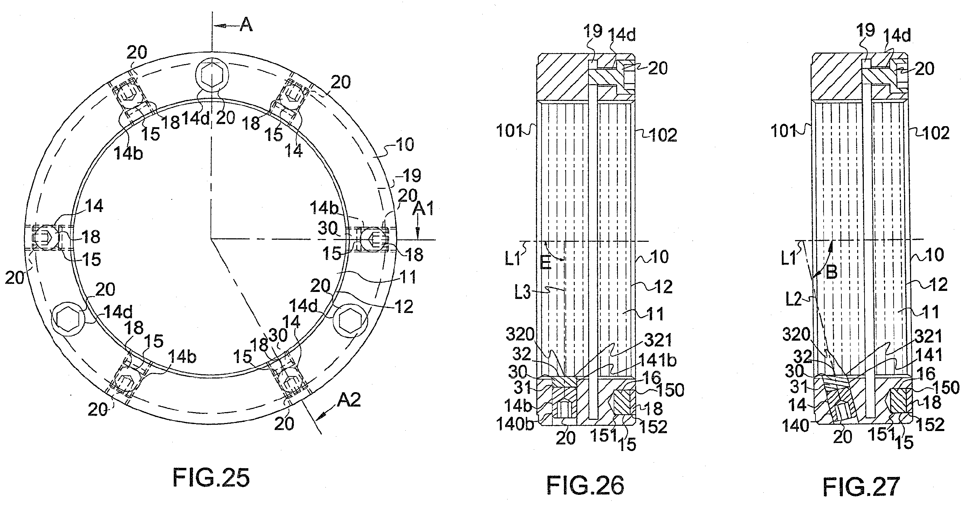

Referring to FIGs. 25 to 27, the second embodiment to achieve the second objective of the present invention is detailed as following descriptions. A coupling opening 11, three thru-holes 14, three thru-holes 14b and three thru-holes 14d are defined in an annular main body 10. A locking assembly as depicted in the aforementioned first embodiment is defined within each thru-hole 14/14b respectively, and a locking assembly as depicted in the aforementioned second embodiment is defined within each thru-hole 14d. A groove 19 is radially recessed from the inner wall of the coupling opening 11 of the main body 10, and it also intersects with the thru-hole 14d. When one screw bolt 20 is tightly bolted into the thru-hole 14d, it will compel two sidewalls of the groove 19 to generate a pair of force with opposite directions and to force the inner wall of the coupling opening 11 being partially deformed. Shown as in FIG. 27, each thru-hole 14 includes two joint first straight portions 140/141 with the same axis L2 which has an included angle B between itself and the central axis L1 of the main body 10 (also the axis L2 is perpendicular to the axis of the coupling opening 11). The measure of the included angle B is larger than zero degree and smaller than 90 degree. Shown as in FIG 26, each thru-hole 14b includes two joint second straight portions 140b/141b with the same axis L3 which is perpendicular to the central axis L1 of the main body 10 (the included angle E is 90 degrees). The first straight portion 140 and the second straight portion 140b are both extended to the outer periphery of the main body 10 respectively with inner threads for a screw bolt 20 to be bolted in. The first straight portion 141 and the second straight portion 141b are both extended to the inner wall of the coupling opening 11 respectively for a tightening lump 30 to be lodged in.

### VI. CONCLUSION

According to above detailed embodiments, the advantages of the present invention can be summarized as bellow.
1. The locking nut of the present invention has multi-locking modes and multi-function to firmly lock a work piece onto a shaft. The design of multi-operation options is able to enhance its convenience for users.
2. The locking nut of the present invention has alternant locking modes and multi-function to firmly lock a work piece onto a shaft. The design of multi-operation options is able to enhance its convenience for users and to improve locking efficiency.
3. The locking nut of the present invention has multi-function with weighing and muffling capability to firmly lock a work piece onto a shaft. The design is able to stabilize the rotation of the shaft much better and to reduce the noise cause by the shaft rotation.

While we have shown and described the embodiment in accordance with the present invention, it should be clear to those skilled in the art that further embodiments may be made without departing from the scope of the present invention.

## Claims

1. A precision locking nut having multiple locking mechanism modes comprising:
a main body (10) having opposite a first end surface (101) and a second end surface (102) to be fastened onto a shaft (40), the first end surface (101) being against a work piece (41) on the shaft (40) to maintain superb support between the shaft (40) and the work piece (41), and
a coupling opening (11) axially penetrating through the main body(10), a thread portion (12) being defined on the inner wall of the coupling opening (11) to be bolted onto the shaft (40),
wherein the main body(10) having at least two out of four different types of thru-holes (14, 14b, 14c, 14d) with a locking assembly defined within respectively, namely a first thru-hole, a second thru-hole, a third thru-hole and a fourth thru-hole, the first thru-hole and the second thru-hole having a first locking assembly and a second locking assembly defined therein respectively, the first locking assembly and the second locking assembly including a first screw bolt (20) respectively, and the first locking assembly and the second locking assembly being driven by tightening the screw bolts (20) to tightly lock the main body (10) and the shaft (40) with different modes of mechanism,
the first locking assembly includes a first tightening lump (30); the first thru-hole (14) includes two joint first straight portions (140, 141) respectively extending to the outer periphery of the main body (10) and the inner wall of the coupling opening (11); the first straight portion (140) extending to the main body (10) outer periphery has inner threads for the first screw bolt (20) to be bolted in; the first straight portion (141) extending to the inner wall of the coupling opening (11) allows one first tightening lump (30) to be lodged in; the first tightening lump (30) has two opposite end portions (31, 32); one end portion (31) of the first tightening lump (30) is pushed by the first screw bolt (20) and the other end portion (32) has a first tightening surface (320); the first tightening surface (320) is in accord with the wall of the coupling opening (11) and is curved to match the periphery of the coupling opening (11); and the first tightening surface (320) also has a second thread portion (321) with the same thread size as the thread of the first thread portion (12) of the coupling opening (11), the second locking assembly also includes a first tightening lump (30) respectively; the second thru-hole (14b) includes two joint second straight portions (140b, 141b) respectively extending to the outer periphery of the main body (10) and the inner wall of the coupling opening (11); the second straight portion (140b) extending to the main body (10) outer periphery has inner threads for the first screw bolt (20) to be bolted in; the second straight portion (141b) extending to the inner wall of the coupling opening (11) also allows one first tightening lump (30) to be lodged in;
**characterized in that**
there is at least a third thru-hole (14c) defined in the main body (10), the third thru-hole (14c) includes two joint third straight portions (140c, 141c) which are extended to the outer periphery of the main body (10) and the inner wall of the coupling opening (11) respectively; one third straight portion (140c) extending to the outer periphery of the main body (10) has inner threads for a second screw bolt (20) to be bolted in, the other third straight portion (141c) extending to the inner wall of the coupling opening (11) allows a second tightening lump (30) to be lodged in; the second tightening lump (30) has two opposite end portions (31, 32); one end portion (31) of the second tightening lump (30) is pushed by the second screw bolt (20) and the other end portion (32) of the second tightening lump (30) has a second tightening surface (320); the second tightening surface (320) is in accord with the wall of the coupling opening (11) and is curved matching the periphery of the coupling opening (11); and the second tightening surface (320) has a third thread portion (321) with the same thread size as the thread of the first thread portion (12) of the coupling opening (11),
the two joint third straight portions (140c, 141c) are inclined to each other and have an included angle between their axes; one of the third straight portions (140c) is extended to the second end surface (102) of the main body (10)
the shapes of the axial paths of the first thru-hole (14), the second thru-hole (14b) and the third thru-hole (14c) against the central axis (L1) of the main body (10) are different from each other.

2. The precision locking nut having multiple locking mechanism modes as claimed in claim 1, **characterized in that** the two joint first straight portions (140, 141) are aligned along an axis which has an included angle (B) with respect to the central axis (L1) of the main body (10); the measure of the included angle (B) is larger than zero degree and smaller than 90 degree; and the two joint second straight portions (140b, 141b) are aligned along an axis (L3) which is perpendicular to the axis (L1) of the coupling opening (11).

3. The precision locking nut having multiple locking mechanism modes as claimed in claim 1, **characterized in that** the two joint first straight portions (140, 141) are aligned along an axis (L2) which has an included angle (B) with respect to the central axis (L1) of the main body (10); the measure of the included angle (B) is larger than zero degree and smaller than 90 degree; the two joint second straight portions (140b, 141b) have an included angle between their axes; and one of the second straight portions (140b) is extended to the second end surface (102) of the main body (10).

4. The precision locking nut having multiple locking mechanism modes as claimed in claim 1, 2 or 3, **characterized in that** there is a plurality of the first thru-holes (14) and the second thru-holes (14b) with the same quantity and they are alternately distributed around the central axis (L1) of the main body (10) with equal central angles.

5. The precision locking nut having multiple locking mechanism modes as claimed in claim 1, **characterized in that** there is a plurality of the first thru-holes (14), the second thru-holes (14b) and the third thru-holes (14c) with the same quantity and they are alternately distributed around the central axis (L1) of the main body (10) with equal central angles.

6. The precision locking nut having multiple locking mechanism modes as claimed in claim 1, **characterized in that** the included angle between the two joint third straight portions (140c, 141c) is 90 degrees and a vent 142 is extended from the joint of the two third straight portions (140c, 141c) to the outer periphery of the main body 10.

## Patentansprüche

1. Präzisionssicherungsmutter mit mehreren Arten von Arretierungsmechanismen, umfassend:
einen Hauptkörper (10) mit einer ersten Endfläche (101) und einer zweiten Endfläche (102), die einander gegenüberliegen, zur Befestigung auf einer Welle (40), wobei die erste Endfläche (101) an einem an der Welle (40) angeordneten Werkstück (41) anliegt, um einen hervorragenden Halt des Werkstücks (41) an der Welle (40) aufrechtzuerhalten, und
eine Verbindungsöffnung (11), die den Hauptkörper (10) axial durchdringt, wobei ein Gewindeabschnitt (12) zur Verschraubung an der Welle (40) an der Innenwand der Verbindungsöffnung (11) ausgebildet ist,
wobei der Hauptkörper (10) wenigstens zwei von vier verschiedenen Arten von Durchgangslöchern (14, 14b, 14c, 14d), nämlich ein erstes Durchgangsloch, ein zweites Durchgangsloch, ein drittes Durchgangsloch und ein viertes Durchgangsloch, aufweist, in welchen jeweils eine Verriegelungsgruppe ausgebildet ist, wobei das erste Durchgangsloch und das zweite Durchgangsloch entsprechend mit einer ersten Verriegelungsgruppe und einer zweiten Verriegelungsgruppe darin ausgebildet sind, wobei die erste Verriegelungsgruppe und die zweite Verriegelungsgruppe jeweils einen ersten Schraubbolzen (20) umfassen, und wobei die erste Verriegelungsgruppe und die zweite Verriegelungsgruppe durch Festziehen der Schraubbolzen (20) angetrieben werden, um den Hauptkörper (10) und die Welle (40) mit verschiedenen Arten von Mechanismert fest aneinander zu verriegeln,
wobei die erste Verriegelungsgruppe ein erstes Spannstück (30) beinhaltet, wobei das erste Durchgangsloch (14) zwei verbundene erste gerade Abschnitte (140, 141) umfasst, die sich zur Außenperipherie des Hauptkörpers (10) beziehungsweise zur Innenwand der Verbindungsöffnung (11) erstrecken, wobei der erste gerade Abschnitt (140), der sich zur Außenperipherie des Hauptkörpers (10) erstreckt, ein Innengewinde zum Einschrauben des ersten Schraubbolzens (20) aufweist, wobei der erste gerade Abschnitt (141), der sich zur Innenwand der Verbindungsöffnung (11) erstreckt, das Festklemmen eines ersten Spannstücks (30) ermöglicht, wobei das erste Spannstück (30) zwei gegenüberliegende Endabschnitt (31, 32) hat, wobei ein Endabschnitt (31) des ersten Spannstücks (30) durch den ersten Schraubbolzen (20) gedrückt wird, wobei der andere Endabschnitt (32) eine erste Spannfläche (320) hat, wobei die erste Spannfläche (320) mit der Wand der Verbindungsöffnung (11) übereinstimmt und gebogen ist, um mit der Peripherie der Verbindungsöffnung (11) zusammenzupassen, wobei die erste Spannfläche (320) ferner einen zweiten Gewindeabschnitt (321) mit der gleichen Gewindegröße wie das Gewinde des ersten Gewindeabschnitts (12) der Verbindungsöffnung (11) aufweist, wobei die zweite Verriegelungsgruppe entsprechend auch ein erstes Spannstück (30) beinhaltet, wobei das zweite Durchgangsloch (14b) zwei verbundene zweite gerade Abschnitte (140b, 141b) umfasst, die sich zur Außenperipherie des Hauptkörpers (10) beziehungsweise zur Innenwand der Verbindungsöffnung (11) erstrecken, wobei der zweite gerade Abschnitt (140b), der sich zur Außenperipherie des Hauptkörpers (10) erstreckt, ein Innengewinde zum Einschrauben des ersten Schraubbolzens (20) hat, wobei der zweite gerade Abschnitt (141b), der sich zur Innenwand der Verbindungsöffnung (11) erstreckt, auch das Festklemmen eines ersten Spannstücks (30) ermöglicht,
**dadurch gekennzeichnet, dass**
in dem Hauptkörper (10) wenigstens ein drittes Durchgangsloch (14c) ausgebildet ist,
wobei das dritte Durchgangsloch (14c) zwei verbundene dritte gerade Abschnitte (140c, 141c) umfasst, die sich zur Außenperipherie des Hauptkörpers (10) beziehungsweise zur Innenwand der Verbindungsöffnung (11) erstrecken, wobei der dritte gerade Abschnitt (140c), der sich zur Außenperipherie des Hauptkörpers (10) erstreckt, ein Innengewinde zum Einschrauben eines zweiten Schraubbolzens (20) hat, wobei der andere dritte gerade Abschnitt (141c), der sich zur Innenwand der Verbindungsöffnung (11) erstreckt, das Festklemmen eines zweiten Spannstückes (30) ermöglicht, wobei das zweite Spannstück (30) zwei gegenüberliegende Endabschnitte (31, 32) hat, wobei ein Endabschnitt (31) des zweiten Spannstückes (30) durch den zweiten Schraubbolzen (20) gedrückt wird, wobei der andere Endabschnitt (32) des zweiten Spannstücks (30) eine zweite Spannfläche (320) aufweist, wobei die zweite Spannfläche (320) mit der Wand der Verbindungsöffnung (11) übereinstimmt und gebogen ist und mit der Peripherie der Verbindungsöffnung (11) zusammenpasst, wobei die zweite Spannfläche (320) einen dritten Gewindeabschnitt (321) mit der gleichen Gewindegröße wie das Gewinde des ersten Gewindesbschnitts (12) der Verbindungsöffnung (11) aufweist,
die zwei verbundenen dritten geraden Abschnitte (140c, 141c) schräg zueinander sind und zwischen ihren Achsen einen eingeschlossenen Winkel aufweisen, wobei sich einer der dritten geraden Abschnitte (140c) zur zweiten Endfläche (102) des Hauptkörpers (10) erstreckt,
wobei die Formen der axialen Wege des ersten Durchgangslochs (14), des zweiten Durchgangslochs (14b) und des dritten Durchgangslochs (14c) bezogen auf die Mittelachse (L1) des Hauptkörpers (10) voneinander verschieden sind.

2. Präzisionssicherungsmutter mit mehreren Arten von Arretierungsmechanismen nach Anspruch 1, **dadurch gekennzeichnet, dass** die zwei verbundenen ersten geraden Abschnitte (140, 141) entlang einer Achse ausgerichtet sind, welche in Bezug auf die Mittelachse (L1) des Hauptkörpers (10) einen eingeschlossenen Winkel (B) aufweist, wobei das Maß des eingeschlossenen Winkels (B) größer als null Grad und kleiner als 90 Grad ist, und wobei die zwei verbundenen zweiten geraden Abschnitte (140b, 141b) entlang einer Achse (L3) ausgerichtet sind, die senkrecht zur Achse (L1) der Verbindungsöffnung (11) ist.

3. Präzisionssicherungsmutter mit mehreren Arten von Arretierungsmechanismen nach Anspruch 1, **dadurch gekennzeichnet, dass** die zwei verbundenen ersten geraden Abschnitte (140, 141) entlang einer Achse (L2) ausgerichtet sind, welche in Bezug auf die Mittelachse (L1) des Hauptkörpers (10) einen eingeschlossenen Winkel (B) aufweist, wobei das Maß des eingeschlossenen Winkels (B) größer als null Grad und kleiner als 90 Grad ist, wobei die zwei verbundenen zweiten geraden Abschnitte (140b, 141b) zwischen ihren Achsen einen eingeschlossenen Winkel aufweisen, und wobei sich einer der zweiten geraden Abschnitte (140b) zu der zweiten Endfläche (102) des Hauptkörpers (10) erstreckt.

4. Präzisionssicherungsmutter mit mehreren Arten von Arretierungsmechanismen nach Anspruch 1, 2 oder 3, dadurch gekennzeichet, dass eine Mehrzahl von ersten Durchgangslöchern (14) und zweiten Durchgangslöchern (14b) vorgesehen ist, wobei deren Anzahl gleich ist, und wobei diese abwechselnd mit gleichen Mittelpunktswinkeln um die Mittelachse (L1) des Hauptkörpers (10) verteilt sind.

5. Präzisionssicherungsmutter mit mehreren Arten von Arretierungsmechanismen nach Anspruch 1, **dadurch gekennzeichnet, dass** eine Mehrzahl von ersten Durchgangslöchern (14), zweiten Durchgangslöchern (14b) und dritten Durchgangslöchern (14c) vorgesehen ist, wobei deren Anzahl gleich ist, und wobei diese abwechselnd mit gleichen Mittelpunktswinkeln um die Mittelachse (L1) des Hauptkörpers (10) verteilt sind.

6. Präzisionssicherungsmutter mit mehreren Arten von Arretierungsmechanismen nach Anspruch 1, **dadurch gekennzeichnet, dass** der zwischen den zwei verbundenen dritten geraden Abschnitten (140c, 141c) eingeschlossene Winkel 90 Grad beträgt, wobei sich ein Luftloch (142) von der Verbindungsstelle der beiden dritten geraden Abschnitte (140c, 141c) zur Außenperipherie des Hauptkörpers (10) erstreckt.

## Revendications

1. Écrou de verrouillage de précision présentant de multiples modes de mécanisme de verrouillage comprenant:
un corps principal (10) présentant une première surface d'extrémité (101) et une seconde surface d'extrémité (102) en regard à fixer sur un arbre (40), la première surface d'extrémité (101) étant située contre une pièce de travail (41) sur l'arbre (40) pour maintenir un remarquable support entre l'arbre (40) et la pièce de travail (41) et
une ouverture de couplage (11) pénétrant axialement au travers du corps principal (10), une partie de filet (12) étant définie sur la paroi intérieure de l'ouverture de couplage (11) à fixer par boulon sur l'arbre (40),
dans lequel le corps principal (10) présentant au moins deux sur quatre différents types de trous débouchants (14, 14b, 14c, 14d) avec un ensemble de verrouillage défini dedans respectivement, à savoir un premier trou débouchant,
un deuxième trou débouchant, un troisième trou débouchant et un quatrième trou débouchant, le premier trou débouchant et le deuxième trou débouchant présentant un premier ensemble de verrouillage et un deuxième ensemble de verrouillage défini dedans respectivement, le premier ensemble de verrouillage et le deuxième ensemble de verrouillage incluant un premier boulon fileté (20) respectivement, et le premier ensemble de verrouillage et le deuxième ensemble de verrouillage étant entraînés par serrage des boulons filetés (20) pour verrouiller fermement le corps principal (10) et l'arbre (40) avec différents modes de mécanisme,
le premier ensemble de verrouillage inclut une première masse de serrage (30); le premier trou débouchant (14) inclut deux premières parties droites de joint (140, 141) s'étendant respectivement vers la périphérie extérieure du corps principal (10) et la paroi intérieure de l'ouverture de couplage (11); la première partie droite (140) s'étendant vers la périphérie extérieure du corps principal (10) présente des filets intérieurs pour le premier boulon fileté (20) à fixer dedans par boulon; la première partie droite (141) s'étendant vers la paroi intérieure de l'ouverture de couplage (11) permet à une première masse de serrage (30) d'être déposée dedans; la première masse de serrage (30) présente deux parties d'extrémité en regard (31, 32); une partie d'extrémité (31) de la première masse de serrage (30) est poussée par le premier boulon fileté (20) et l'autre partie d'extrémité (32) présente une première surface de serrage (320); la première surface de serrage (320) est en accord avec la paroi de l'ouverture de couplage (11) et est courbée pour correspondre à la périphérie de l'ouverture de couplage (11); et la première surface de serrage (320) présente aussi une seconde partie de filet (321) avec la même taille de filet que le filet de la première partie de filet (12) de l'ouverture de couplage (11), le second ensemble de verrouillage inclut aussi une première masse de serrage (30) respectivement; le deuxième trou débouchant (14b) inclut deux deuxièmes parties droites de joint (140b, 141 b) s'étendant respectivement vers la périphérie extérieure du corps principal (10) et la paroi intérieure de l'ouverture de couplage (11); la deuxième partie droite (140b) s'étendant vers la périphérie extérieure du corps principal (10) présente des filets intérieurs pour le premier boulon fileté (20) à fixer par boulon dedans; la deuxième partie droite (141b) s'étendant vers la paroi intérieure de l'ouverture de couplage (11) permet aussi à une première masse de serrage (30) d'être déposée dedans;
**caractérisé en ce que**
au moins un troisième trou débouchant (14c) est défini dans le corps principal (10), le troisième trou débouchant (14c) inclut deux troisièmes parties droites de joint (140c, 141c) qui sont étendues vers la périphérie extérieure du corps principal (10) et la paroi intérieure de l'ouverture de couplage (11) respectivement; une troisième partie droite (140c) s'étendant vers la périphérie extérieure du corps principal (10) présente des filets intérieurs pour un second boulon fileté (20) à fixer par boulon dedans, l'autre troisième partie droite (141c) s'étendant vers la paroi intérieure de l'ouverture de couplage (11) permet à une seconde masse de serrage (30) d'être déposée dedans; la seconde masse de serrage (30) présente deux parties d'extrémité en regard (31, 32); une partie d'extrémité (31) de la seconde masse de serrage (30) est poussée par le second boulon fileté (20) et l'autre partie d'extrémité (32) de la seconde masse de serrage (30) présente une seconde surface de serrage (320); la seconde surface de serrage (320) est en accord avec la paroi de l'ouverture de couplage (11) et est courbée de manière correspondante à la périphérie de l'ouverture de couplage (11), et la deuxième surface de serrage (320) présente une troisième partie de filet (321) avec la même taille de filet que le filet de la première partie de filet (12) de l'ouverture de couplage (11),
les deux troisièmes parties droites de joint (140c, 141c) sont inclinées l'une vers l'autre et présente un angle inclus entre leurs axes; une des troisièmes parties droites (140c) est étendue vers la seconde surface d'extrémité (102) du corps principal (10),
les formes des voies axiales du premier trou débouchant (14), du deuxième trou débouchant (14b) et du troisième trou débouchant (14c) contre l'axe central (L1) du corps principal (10) sont différentes les unes des autres.

2. Écrou de verrouillage de précision présentant de multiples modes de mécanisme de verrouillage selon la revendication 1, **caractérisé en ce que** les deux premières parties droites de joint (140, 141) sont alignées le long d'un axe qui présente un angle inclus (B) par rapport à l'axe central (L1) du corps principal (10); la mesure de l'angle inclus (B) est supérieure à zéro degré et inférieure à 90 degrés ; et les deux deuxièmes parties droites de joint (140b, 141 b) sont alignées le long d'un axe (L3) qui est perpendiculaire à l'axe (L1) de l'ouverture de couplage (11).

3. Écrou de verrouillage de précision présentant de multiples modes de mécanisme de verrouillage selon la revendication 1, **caractérisé en ce que** les deux premières parties droites de joint ('140, '141) sont alignées le long d'un axe (L2) qui présente un angle inclus (B) par rapport à l'axe central (L1) du corps principal (10); la mesure de l'angle inclus (B) est supérieure à zéro degré et inférieure à 90 degrés ; les deux deuxièmes parties droites de joint (140b, 141b) présentent un angle inclus entre leurs axes ; et une des deuxièmes parties droites (140b) est étendue vers la seconde surface d'extrémité (102) du corps principal (10).

4. Écrou de verrouillage de précision présentant de multiples modes de mécanisme de verrouillage selon la revendication 1, 2 ou 3, **caractérisé en ce qu'**il y a une pluralité de premiers trous débouchant (14) et de deuxièmes trous débouchants (14b) avec la même quantité et ils sont distribués alternativement autour de l'axe central (L1) du corps principal (10) avec des angles centraux égaux.

5. Écrou de verrouillage de précision présentant de multiples modes de mécanisme de verrouillage selon la revendication 1, **caractérisé en ce qu'**il y a une pluralité de premiers trous débouchants (14), de deuxièmes trous débouchants (14b) et de troisièmes trous débouchants (14c) avec la même quantité et ils sont distribués alternativement autour de l'axe central (L1) du corps principal (10) avec des angles centraux égaux.

6. Écrou de verrouillage de précision présentant de multiples modes de mécanisme de verrouillage selon la revendication 1, **caractérisé en ce que** l'angle inclus entre les deux troisièmes parties droites de joint (140c, 141c) est de 90 degrés et un orifice (142) est étendu depuis le joint des deux troisièmes parties droites (140c, 141c) à la périphérie extérieure du corps principal (10),
